# EUROPÄISCHE PATENTANMELDUNG

(11) **EP 2 113 440 A2**
(43) Veröffentlichungstag der Anmeldung: **04.11.2009**
(21) Anmeldenummer: 09004276.3
(22) Anmeldetag: 25.03.2009
(51) Int. Cl.: B62D 1/06, B62D 1/04

(54) **Lenkeinheit**

(30) Priorität: 30.04.2008 DE 202008005960 U
(71) Anmelder: Gebrüder Frei GmbH & Co., 72461 Altstadt-Onstmettingen (DE)
(72) Erfinder: Frei, Thomas, 72458 Albstadt (DE); Friedrich, Markus, 72461 Albstadt (DE); Ohngemach, Sven, 72461 Albstadt (DE); Schwarz, Jürgen, 72379 Hechingen (DE)
(74) Vertreter: Hering, Hartmut

(57) **Zusammenfassung**

Es wird eine Lenkeinheit zum Lenken eines Fahrzeugs bereitgestellt, die jeweilige Bedienfelder (20, 30) für Hauptfunktionen und Nebenfunktionen aufweist, wobei die Lenkeinheit aus einem zentralen Körper, der in einer Draufsicht symmetrisch zu einer in Längsrichtung von oben nach unten verlaufenden Achse ist, mit einem Mittelfeld (10) und einem unter dem Mittelfeld (10) angeordneten unteren Bedienfeld (20) und jeweils seitlich zum Mittelfeld (10) und zum unteren Bedienfeld (20) angeordneten seitlichen Bedienfeldern (30) ausgebildet ist, wobei Griffe (40) jeweils seitlich an den seitlichen Bedienfeldern (30) im Bereich des unteren Bedienfelds (20) beginnend achsensymmetrisch angebracht sind, wobei sich die Griffe (40) jeweils zuerst seitlich und dann in Richtung nach oben erstrecken und etwa in Höhe des oberen Rands des Mittelfelds (10) enden, so dass jeweils ein Freiraum zwischen einem Griff (40) und dem zentralen Körper gebildet wird.

## Beschreibung

Die Erfindung betrifft allgemein eine Lenkeinheit für Fahrzeuge, wie beispielsweise Flurförderzeuge bzw. Gabelstapler.

Es sind Lenkeinheiten für Fahrzeuge bekannt, in welchen eine Bedieneinheit zum Bedienen des Fahrzeugs integriert ist. Solche Lenkeinheiten werden auf übliche Weise zum Lenken des Fahrzeugs genutzt. An ihnen sind Schaltelemente, Bedienelemente und eine Anzeigeeinrichtung zusammen mit zu dieser Anzeigeeinrichtung gehörenden Funktionstasten am Lenkrad auf derartige Weise angeordnet, dass sie entsprechend ihrer Funktion für einen Bediener des Fahrzeugs auf ergonomische Weise am Lenkrad angebracht sind.

Durch jeweiliges Betätigen von am Lenker vorgesehenen Schaltelementen und/oder Bedienelementen für Hauptfunktionen und/oder Bedienelementen für Nebenfunktionen kann ein Anwender veranlassen, dass das Fahrzeug verschiedene Funktionen ausführt. Schaltelementen sind dabei im Fahrbetrieb fortwährend zu verwendende Funktionen, wie ein Fahren des Fahrzeugs in Vorwärts- oder Rückwärtsrichtung, einschließlich eines Beschleunigens und eines Abbremsens, zugeordnet. Bedienelementen für Hauptfunktionen sind dabei häufig zu verwendende Funktionen, wie beispielsweise ein Heben oder Senken einer Gabel bei Flurförderzeugen, zugeordnet. Schließlich sind Bedienelementen für Nebenfunktionen weniger häufig zu verwendende Funktionen, wie beispielsweise ein Hupen, ein Initialhub, ein Schleichgang, etc., zugeordnet.

Es gibt Fahrzeuge, wie beispielsweise Flurförderzeuge, bei welchen ein Lenken des Fahrzeugs auf verschiedene Arten erfolgt. In einem Mitgängerbetrieb erfolgt ein Lenken über eine Deichsel. In einem Fahrbetrieb, in welchem eine Bedienperson auf einer Stellfläche am Fahrzeug steht, wird die Deichsel so gestellt, dass sie als Lenker für das Fahrzeug dient. Die Verwendung einer Deichsel im Fahrbetrieb als Lenker hat jedoch den Nachteil, dass eine Deichsel für ein Lenken des Fahrzeugs viel Platz benötigt und zu wenig Raum für eine Bedienperson im Fahrbetrieb bleibt. Es gibt auch noch den Fahrbetrieb, in welchem eine Bedienperson beim Lenken auf einer vorgesehenen Sitzvorrichtung sitzen kann.

Es ist eine Aufgabe der Erfindung, eine einfach zu bedienende Lenkeinheit zur Verfügung zu stellen, die ohne weiteres in verschiedenen Betriebsarten betreibbar ist und in verschiedenen Fahrzeugen verwendet werden kann, ohne große Änderungen an ihr vorzunehmen.

Diese Aufgabe wird erfindungsgemäß durch die im Anspruch 1 angegebene Lenkeinheit gelöst. Die abhängigen Ansprüche 2 bis 10 zeigen spezielle Ausführungsformen der Lenkeinheit gemäß Anspruch 1.

Die erfindungsgemäße Lenkeinheit weist jeweilige Bedienfelder für Hauptfunktionen und Nebenfunktionen auf und ist aus einem zentralen Körper, der in einer Draufsicht symmetrisch zu einer in Längsrichtung von oben nach unten verlaufenden Achse ist, mit einem Mittelfeld und einem unter dem Mittelfeld angeordneten unteren Bedienfeld und jeweils seitlich zum Mittelfeld und zum unteren Bedienfeld angeordneten seitlichen Bedienfeldern ausgebildet. Insbesondere sind Griffe jeweils seitlich zu den seitlichen Bedienfeldern im Bereich des unteren Bedienfelds beginnend achsensymmetrisch angebracht, wobei sich die Griffe jeweils zuerst seitlich und dann in Richtung nach oben erstrecken und etwa in Höhe des oberen Rands des Mittelfelds enden, so dass jeweils ein Freiraum zwischen einem Griff und dem zentralen Körper gebildet ist.

Vorzugsweise ist das Mittelfeld der Lenkeinheit als ein sich während einer Drehbewegung nicht drehendes Mittelfeld ausgebildet.

Bevorzugt ist das Mittelfeld an seinem oberen Rand mit einem Blendschutz versehen ist.

Im Mittelfeld sind vorzugsweise eine Anzeigeeinrichtung und zu ihr gehörende Funktionstasten vorgesehen.

Die seitlichen Bedienfelder sind vorzugsweise mit Bedienelementen für Hauptfunktionen versehen, während das untere Bedienfeld vorzugsweise mit weiteren Bedienelementen für Nebenfunktionen versehen ist, die in der Bedienhierarchie den Hauptfunktionen untergeordnet sind.

Insbesondere ist auch ein Schaltelement zum Ausführen einer Fahrfunktion bei einer für einen Bediener in verschiedenen Betriebsarten, wie einem Lenkbetrieb zum Lenken des Fahrzeugs mit Hilfe einer Steer-by-Wire-Lenkung, einem Deichselbetrieb für einen Mitgängerbetrieb und einem Lenkbetrieb zum Lenken des Fahrzeugs mit Hilfe einer Lenkübertragung über eine Achse, gut zu erreichenden Position am Griff, im unteren Bedienfeld oder im seitlichen Bedienfeld vorgesehen.

Die Lenkeinheit ist vorteilhaft auf einem rund ausgebildeten Unterbau angeordnet. Dadurch ist ihr einfacher Einbau in beliebiger Höhe möglich.

Vorzugsweise sind/ist eine Notstopptaste und/oder eine Alarmtaste oben, unten oder seitlich an der Lenkeinheit vorgesehen.

Insbesondere ist das Mittelfeld kreisförmig ausgebildet.

Durch die erfindungsgemäße Lenkeinheit wird im Vergleich mit bekannten Lenkeinheiten insbesondere eine größere Flexibilität und eine Vereinfachung in Bezug auf einen Einbau der Lenkeinheit und in Bezug auf eine Bedienung der Lenkeinheit erreicht.

Die angegebenen und weitere Merkmale und Einzelheiten der Erfindung werden einem Fachmann auf dem Gebiet aus der folgenden detaillierten Beschreibung und den beigefügten Zeichnungen klarer, die Merkmale der vorliegenden Erfindung anhand eines Beispiels darstellen und wobei:
- Fig. 1: eine Draufsicht auf eine Lenkeinheit gemäß einer bevorzugten Ausführungsform zeigt;
- Fig. 2: eine Ansicht der Lenkeinheit der Figur 1 von oben zeigt;
- Fig. 3: eine Ansicht der Lenkeinheit der Figur 1 von unten zeigt;
- Fig. 4: eine Seitenansicht der Lenkeinheit der Figur 1 zeigt;
- Fig. 5: eine isometrische Ansicht der Lenkeinheit der Figur 1 von oben zeigt; und
- Fig. 6: eine isometrische Ansicht der Lenkeinheit der Figur 1 von unten zeigt.

Im Folgenden wird die vorliegende Erfindung anhand einer bevorzugten Ausführungsform unter Bezugnahme auf die beigefügten Zeichnungen detailliert erklärt.

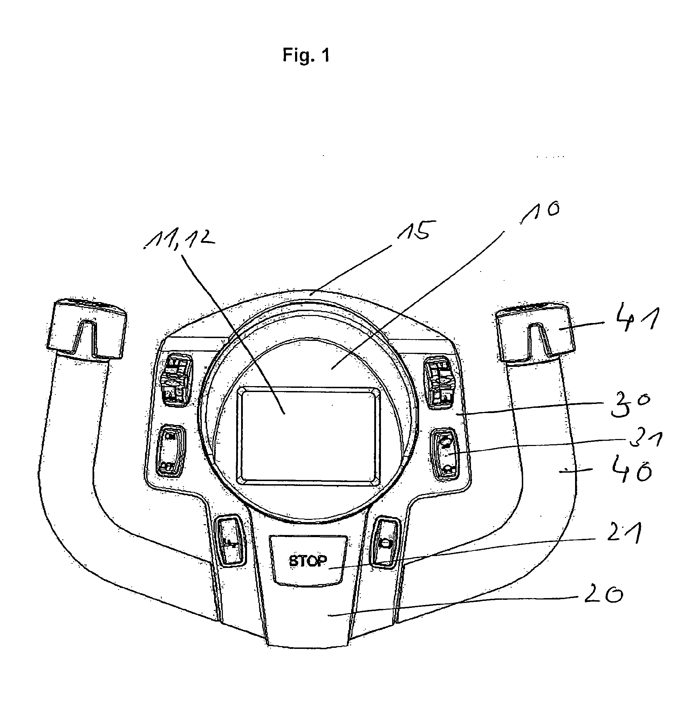

Die Figur 1 zeigt eine Draufsicht auf eine erfindungsgemäße Lenkeinheit.

Die Lenkeinheit weist einen zentralen Körper auf, der symmetrisch zu einer in Längsrichtung von oben nach unten verlaufenden Achse ist. Der zentrale Körper weist ein Mittelfeld 10 und ein unter dem Mittelfeld 10 angeordnetes Bedienfeld 20 auf. Das Mittelfeld 10 des zentralen Körpers ist hier kreisförmig ausgebildet. Seitlich zu dem Mittelfeld 10 und zu dem unteren Bedienfeld 20 sind jeweils seitliche Bedienfelder 30 vorgesehen. Weiterhin sind symmetrisch zur Achse Griffe 40 angebracht, die seitlich am unteren Bedienfeld 20 beginnen, sich von dort zuerst seitlich und dann in Richtung nach oben erstrecken und etwa in Höhe des oberen Rands des Mittelfelds 10 enden, so dass jeweils ein Freiraum zwischen einem Griff 40 und dem zentralen Körper gebildet wird.

Die Griffe 40 werden von einem Bediener zum Lenken des Fahrzeugs im Lenkbetrieb ergriffen und können von ihm auch im Deichselbetrieb ergriffen werden. Das Mittelfeld 10 kann beim Lenken im Lenkbetrieb gegenüber einer Drehbewegung fest sein.

Schaltelemente 41 sind an den Griffen 40 integriert angebracht. In der Fig. 1 sind zwei Schaltelemente 41 vorgesehen. Sie sind hier am oberen Ende der Griffe 40 angebracht. Diese Schaltelemente 41 sind für einen Bediener in jeder Betriebsart des Lenkers auf einfache Weise zu erreichen und zu betätigen.

Das Schaltelement 41 dient vorzugsweise zum Ausführen einer Fahrfunktion in verschiedenen Betriebsarten, wie einem Lenkbetrieb zum Lenken des Fahrzeugs mit Hilfe einer Steer-by-Wire-Lenkung, einem Deichselbetrieb für einen Mitgängerbetrieb und einem Lenkbetrieb zum Lenken des Fahrzeugs mit Hilfe einer Lenkübertragung über eine Achse.

Im Mittelfeld 10 sind vorzugsweise eine Anzeigeeinrichtung 11 und zu ihr gehörende Funktionstasten 12 vorgesehen.

Die seitlichen Bedienfelder 20 sind vorzugsweise mit Bedienelementen 21 für Hauptfunktionen versehen, während das untere Bedienfeld 30 vorzugsweise mit weiteren Bedienelementen 31 für Nebenfunktionen versehen ist, die in der Bedienhierarchie den Hauptfunktionen untergeordnet sind.

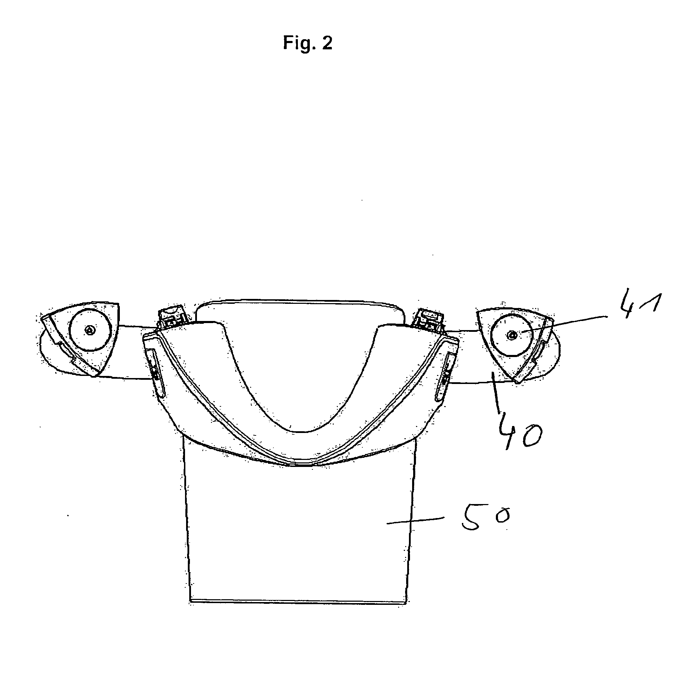

Die Figur 2 zeigt eine Ansicht der erfindungsgemäßen Lenkeinheit von oben, wobei in dieser Figur 2 insbesondere zu sehen ist, dass die Lenkeinheit auf einem rund ausgebildeten Unterbau 50 angeordnet ist. Dadurch ist ihr einfacher Einbau in beliebiger Höhe möglich. Weiterhin sind die Schaltelemente 41 an den Griffen 40 gut zu erkennen.

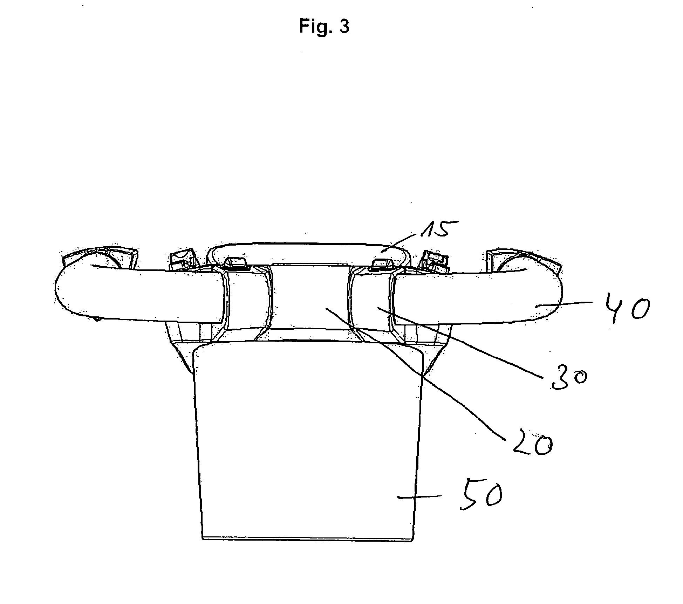

Die Figur 3 zeigt eine Ansicht der erfindungsgemäßen Lenkeinheit von unten, wobei insbesondere die Anbringung der Griffe 40 an den seitlichen Bedienfeldern 30 jeweils neben dem unteren Bedienfeld 20 gut zu erkennen ist. Auch der Unterbau 50 ist in der Figur 3 gut zu sehen. Weiterhin ist ein Blendschutz 15 am Mittelfeld 10 zu sehen.

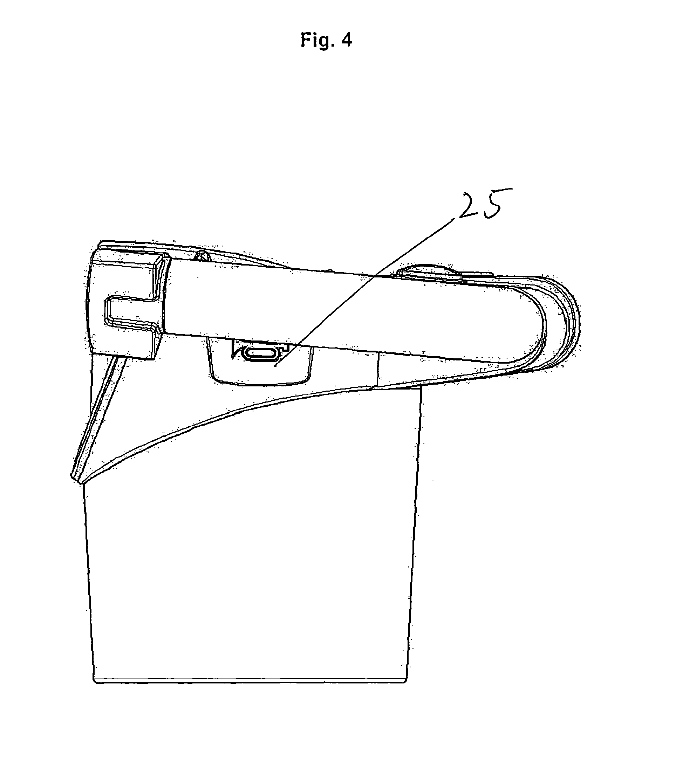

Die Figur 4 zeigt eine Seitenansicht der erfindungsgemäßen Lenkeinheit, wobei hier die in Draufsicht flache Ausgestaltung der Lenkeinheit gut zu sehen ist. Weiterhin ist zu sehen, dass eine Alarmtaste 25 an der Seite der Lenkeinheit vorgesehen ist. Eine derartige Alarmtaste, oder auch eine Notstopptaste, kann an natürlich auch an einer anderen Stelle der Lenkeinheit vorgesehen sein.

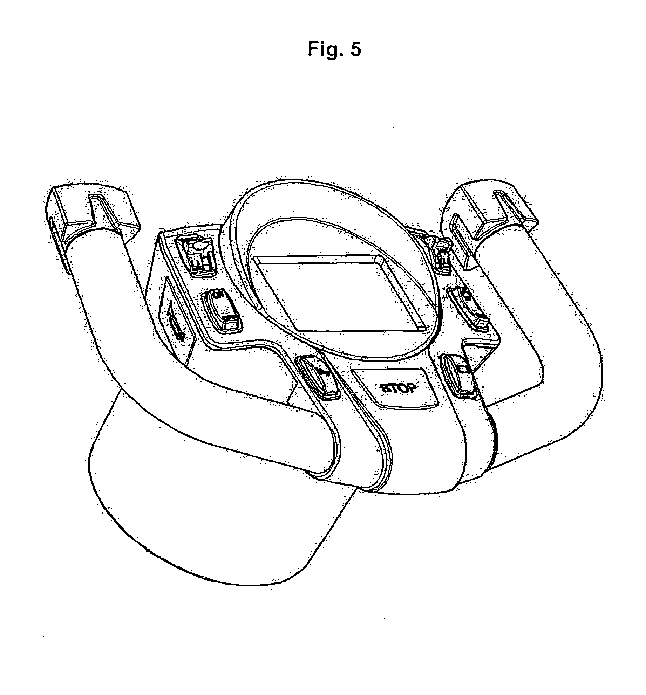

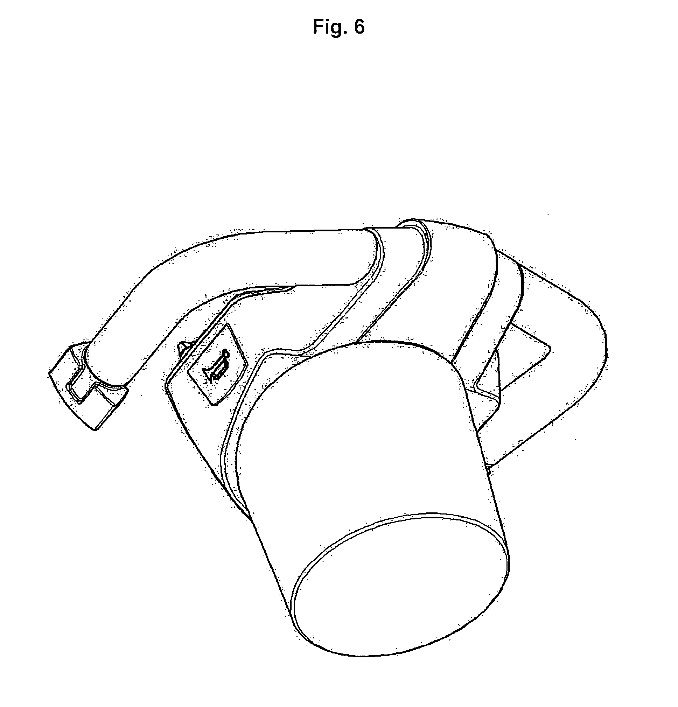

Die Figuren 5 und 6 zeigen jeweils isometrische Ansichten der erfindungsgemäßen Lenkeinheit von oben und von unten. In diesen Figuren ist der Gesamtaufbau der Lenkeinheit besonders gut zu erkennen.

Wie es bereits angegeben wurde, wird durch die besondere Ausgestaltung der Griffe der erfindungsgemäßen Lenkeinheit im Vergleich mit bekannten Lenkeinheiten insbesondere eine größere Flexibilität und eine Vereinfachung in Bezug auf einen Einbau der Lenkeinheit und in Bezug auf eine Bedienung der Lenkeinheit erreicht.

Weiterhin kann das Mittelfeld, das sich bei einer Drehbewegung der Lenkeinheit nicht dreht, immer gut eingesehen werden, so dass es zum Unterbringen einer Anzeigeeinrichtung geeignet ist.

Durch die Anordnung der Bedienfelder und ihrer Bedienelemente ist eine bequeme Steuerung des Fahrzeugs möglich. Durch die besonders ergonomische Ausgestaltung der erfindungsgemäßen Lenkeinheit ist eine flexible Bedienung des Fahrzeugs möglich. Beispielsweise ist eine einfache Bedienung, auch im Stehen, sowohl während einer Vorwärts- als auch während einer Rückwärtsfahrt möglich.

Durch die Anbringung von Bedienelementen in Bezug auf ihre Funktionen, wie Hauptfunktion und Nebenfunktion, wird eine Bedienung für eine Bedienperson vereinfacht.

Die Bedienelemente der Nebenfunktionen sind individuell an verschiedene Gegebenheiten anpassbar.

Der runde Unterbau ermöglicht einen Einbau der Lenkeinheit in beliebiger Höhe.

Somit ist die Lenkeinheit der Erfindung für einen Einbau in verschiedene Fahrzeuge geeignet und ermöglicht eine einfache Bedienung für eine Bedienperson.

## Patentansprüche

1. Lenkeinheit zum Lenken eines Fahrzeugs, die jeweilige Bedienfelder (20, 30) für Hauptfunktionen und Nebenfunktionen aufweist, wobei die Lenkeinheit aus einem zentralen Körper, der in einer Draufsicht symmetrisch zu einer in Längsrichtung von oben nach unten verlaufenden Achse ist, mit einem Mittelfeld (10) und einem unter dem Mittelfeld (10) angeordneten unteren Bedienfeld (20) und jeweils seitlich zum Mittelfeld (10) und zum unteren Bedienfeld angeordneten seitlichen Bedienfeldern (30) ausgebildet ist, wobei Griffe (40) jeweils seitlich an den seitlichen Bedienfeldern (30) im Bereich des unteren Bedienfelds (20) beginnend achsensymmetrisch angebracht sind, wobei sich die Griffe (40) jeweils zuerst seitlich und dann in Richtung nach oben erstrecken und etwa in Höhe des oberen Rands des Mittelfelds (10) enden, so dass jeweils ein Freiraum zwischen einem Griff (40) und dem zentralen Körper gebildet wird.

2. Lenkeinheit nach Anspruch 1, **dadurch gekennzeichnet, dass** das Mittelfeld (10) der Lenkeinheit als ein sich während einer Drehbewegung nicht drehendes Mittelfeld (10) ausgebildet ist.

3. Lenkeinheit nach Anspruch 1 oder 2, **dadurch gekennzeichnet, dass** das Mittelfeld (10) an seinem oberen Rand mit einem Blendschutz (15) versehen ist.

4. Lenkeinheit nach einem der vorangehenden Ansprüche, **dadurch gekennzeichnet, dass** im Mittelfeld (10) eine Anzeigeeinrichtung (11) und zu ihr gehörende Funktionstasten (12) vorgesehen sind.

5. Lenkeinheit nach einem der vorangehenden Ansprüche, **dadurch gekennzeichnet, dass** die seitlichen Bedienfelder (30) mit Bedienelementen (31) für Hauptfunktionen versehen sind.

6. Lenkeinheit nach einem der vorangehenden Ansprüche, **dadurch gekennzeichnet, dass** das untere Bedienfeld (20) mit weiteren Bedienelementen (21) für Nebenfunktionen versehen ist, die in der Bedienhierarchie den Hauptfunktionen untergeordnet sind.

7. Lenkeinheit nach einem Anspruch 6, **dadurch gekennzeichnet, dass** weiteren Bedienelementen (21) für Nebenfunktionen an verschiedene Gegebenheiten anpassbar sind.

8. Lenkeinheit nach einem der vorangehenden Ansprüche, **dadurch gekennzeichnet, dass** ein Schaltelement (41) zum Ausführen einer Fahrfunktion bei einer für einen Bediener in verschiedenen Betriebsarten, wie einem Lenkbetrieb zum Lenken des Fahrzeugs mit Hilfe einer Steer-by-Wire-Lenkung, einem Deichselbetrieb für einen Mitgängerbetrieb und einem Lenkbetrieb zum Lenken des Fahrzeugs mit Hilfe einer Lenkübertragung über eine Achse, gut zu erreichenden Position am Griff (40), im unteren Bedienfeld (20) oder im seitlichen Bedienfeld (30) vorgesehen ist.

9. Lenkeinheit nach einem der vorangehenden Ansprüche, **dadurch gekennzeichnet, dass** sie auf einem rund ausgebildeten Unterbau (50) angeordnet ist.

10. Lenkeinheit nach einem der vorangehenden Ansprüche, **dadurch gekennzeichnet, dass** eine Notstopptaste und/oder einen Alarmtaste (25) oben, unten oder seitlich am Lenker vorgesehen sind/ist.

11. Lenkeinheit nach einem der vorangehenden Ansprüche, **dadurch gekennzeichnet, dass** das Mittelfeld (10) kreisförmig ausgebildet ist.

12. Lenkeinheit nach einem der vorangehenden Ansprüche, **dadurch gekennzeichnet, dass** sie in Draufsicht flach ausgebildet ist.
